# DEMANDE DE BREVET EUROPEEN

(11) **EP 0 872 938 A2**
(43) Date de publication de la demande: **21.10.1998**
(21) Numéro de dépôt: 97200820.5
(22) Date de dépôt: 18.03.1997
(51) Int. Cl.: H02G 15/00, H02G 3/08

(54) **Coffret de protection pour extrémités de câbles électriques**

(71) Demandeur: Lupus Electro S.A., 48100 Marvejols (FR)
(72) Inventeur: Pintenet, Jean-François, 48100 Marvejols (FR)
(74) Mandataire: Arbousse-Bastide, Jean-Claude Philippe

(57) **Abrégé**

Coffret de protection pour extrémités de câbles électriques dont les fils sont destinés notamment à être connectés à une borne de connexion et/ou à une carte électronique (5) disposée dans ledit coffret, du type comprenant deux demi-coques (1) solidarisables l'une à l'autre et comportant chacune des découpes semi-cylindriques (11) destinées à constituer les orifices d'entrée pour câbles (12), prolongées chacune par au moins un logement hémicylindrique (13,14) pour le maintien des câbles (12).

Chaque logement hémicylindrique (13,14) est pourvu d'une gorge (15) pour le maintien soit d'un élément de réduction (2) délimitant un nouvel orifice (21) de diamètre inférieur, soit d'un élément d'obturation (3) de l'orifice d'entrée de câble correspondant.

## Description

La présente invention a pour objet un coffret de protection pour extrémités de câbles électriques dont les fils sont destinés à être connectés notamment à une borne de connexion ou à une carte électronique disposée dans ledit coffret.

On connaît déjà des coffrets pour extrémités de câbles électriques constitués de deux demi-coques et munis d'orifices d'entrée de câbles formés par l'assemblage de découpes semi-cylindriques pratiquées dans la paroi de chaque demi-coque, et prolongées par un ou plusieurs logements semi-cylindriques pour le maintien, à l'aide de brides de serrage, des extrémités des câbles, qui sont généralement de même diamètre.

Toutefois, d'une part tous les orifices d'entrée de ces coffrets ne sont pas toujours utilisés et d'autre part ils correspondent généralement aux câbles de plus gros diamètre couramment utilisés et sont de ce fait difficilement utilisables pour des càbles de diamètre inférieur, sauf à poser des problèmes d'isolation électromagnétique du coffret, en contradiction avec les exigences des normes en vigueur concernant la compatibilité électromagnétique.

La présente invention a pour but de remédier à ces inconvénients des dispositifs connus en proposant un coffret de protection qui est adaptable à différents diamètres de câbles électriques et qui peut être utilisé pour un nombre variable de câbles tout en assurant une isolation électromagnétique satisfaisante.

Le coffret de protection selon l'invention est du type comprenant deux demi-coques solidarisables l'une à l'autre, comportant chacune des découpes hémicylindriques dont l'assemblage forme les orifices d'entrée des câbles, lesdites découpes étant prolongées chacune par au moins un logement hémicylindrique pour le maintien des câbles dans le coffret, et il se caractérise essentiellement en ce que chaque logement hémicylindrique est pourvu d'une gorge pour le maintien soit d'un élément de réduction délimitant un nouvel orifice de diamètre inférieur, soit d'un élément d'obturation de l'orifice d'entrée de câble.

Conformément à l'invention, un élément de réduction est constitué de l'assemblage de deux pièces identiques de forme globalement hémicylindrique, munies chacune en son centre d'un perçage hémicylindrique et en périphérie d'une nervure destinée à s'insérer dans la gorge d'un logement hémicylindrique.

Un élément d'obturation est un disque présentant un bord biseauté qui permet de l'insérer dans les gorges de deux logements hémicylindriques en regard.

Des brides de maintien peuvent en outre être utilisées pour assurer un meilleur maintien des câbles. Elles peuvent être positionnées soit dans l'espace séparant deux séries de logements hémicylindriques, soit en arrière de la série de logements hémicylindriques la plus éloignée des orifices d'entrée des câbles.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.

Dans le dessin annexé:
- la figure 1 représente une vue en perspective partielle d'un coffret selon l'invention.
- la figure 2 représente une vue en perspective partielle du même coffret abritant des extrémités de câbles de diamètres différents.
- la figure 3 représente une vue de dessus d'une demi-coque d'un coffret selon l'invention abritant des extrémités de câbles de diamètres différents connectées à une carte électronique.

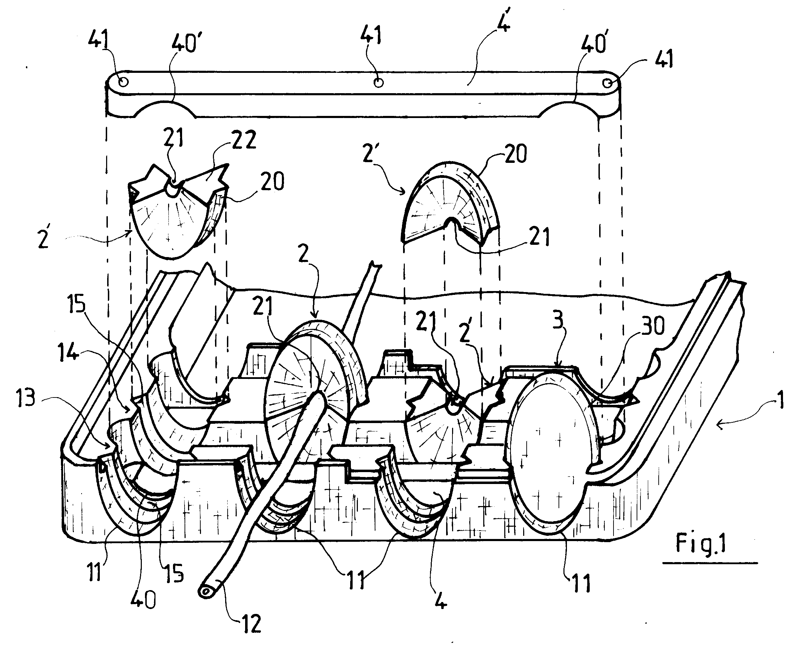

Si on se réfère à la figure 1 on peut voir une demi-coque 1 constituant, par assemblage avec une autre demi-coque identique, non représentée, un coffret selon l'invention. La demi-coque 1 présente la forme d'un parallélépipède rectangle dans la face avant 10 de laquelle sont pratiquées des découpes hémicylindriques 11 formant avec les découpes de l'autre demi-coque des orifices d'entrée pour des câbles 12. Les découpes 11 sont prolongées chacune par deux logements hémicylindriques 13 et 14 comportant, pratiquée centralement dans leur paroi, une gorge transversale 15 pour le maintien d'un élément de réduction 2 ou d'un élément d'obturation 3.

Un élément de réduction 2 est constitué de deux pièces identiques et complémentaires 2' présentant une forme globalement semi-cylindrique et est destiné à permettre le maintien de câbles d'un diamètre inférieur à celui des orifices d'entrée 11. On peut voir sur la figure que les éléments de réduction 2 sont disposés de préférence dans les logements 14 les plus éloignés des orifices d'entrée 11 et sont maintenus transversalement dans lesdits logements grâce à une nervure périphérique 20 qui s'insère dans la gorge 15 du logement 14 correspondant.

Les pièces semi-cylindriques 2' des éléments de réduction 2 comportent chacune une découpe semi-cylindrique 21, pratiquée centralement et longitudinalement dans leur face plane 22, pour le passage d'un câble 12 de petit diamètre.

Ainsi l'assemblage des deux demi-coques 1 du coffret positionne les parties planes des pièces 2' l'une contre l'autre, formant un élément de réduction 2 muni centralement d'un trou cylindrique pour le passage d'un câble 12, que l'on positionne dans l'une des découpes semi-cylindriques 21 d'une pièce 2' avant l'assemblage des deux demi-coques 1.

On remarquera que les gorges 15 pratiquées dans les logements 13 et 14 permettent également d'assurer une isolation électromagnétique suffisante du coffret.

Les éléments d'obturation 3 consistent en des disques qui permettent d'obturer les orifices d'entrée 11 qui ne sont pas utilisés, chaque élément 3 étant muni d'un bord biseauté qui peut être inséré dans la gorge 15 d'un logement 13 situé à proximité immédiate de l'orifice d'entrée 11 à obturer.

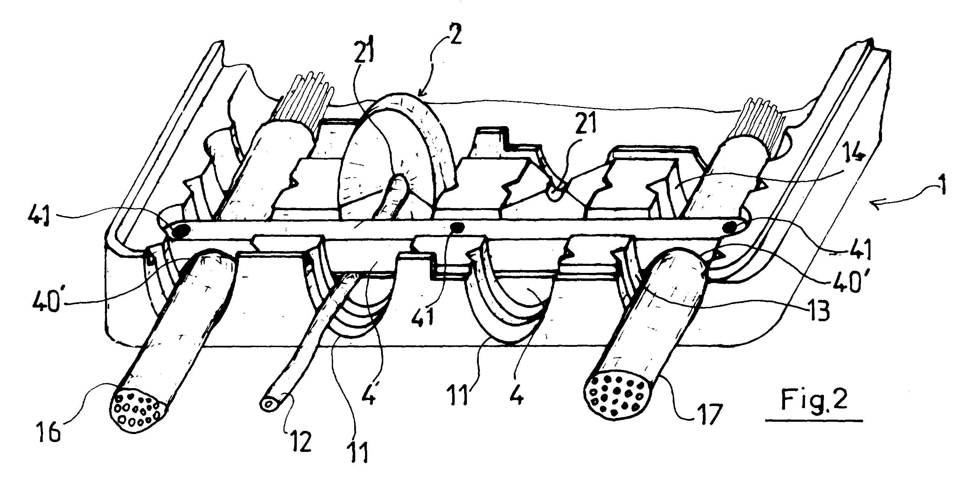

Enfin des brides 4, 4' permettent de renforcer le maintien des câbles 12 dans le coffret. On peut ainsi voir sur la figure 2 deux gros câbles 16 et 17 disposés dans les logements hémicylindriques 13 et 14 qui prolongent les deux orifices d'extrémité 11 et qui ne comportent pas d'éléments de réduction 2, et un câble 12 de petit diamètre traversant l'orifice 21 d'un élément de réduction 2. Les câbles 16, 17 et 12 sont maintenus par deux brides 4 et 4' dont chacune est placée dans l'espace séparant les logements 13 et 14 de chaque demi-coffret et qui peuvent être solidarisées l'une à l'autre par vissage au moyen de vis introduites dans des perçages taraudés 41 ménagés à leurs extrémités et à leur milieu. Chaque bride 4, 4' comporte à ses extrémités deux découpes hémicylindriques 40 et 40' destinées à enserrer les câbles 16 et 17 de gros diamètre, tandis que le câble 12 de petit diamètre est pincé entre les parties planes des brides 4 et 4' situées entre les ouvertures 40, 40'.

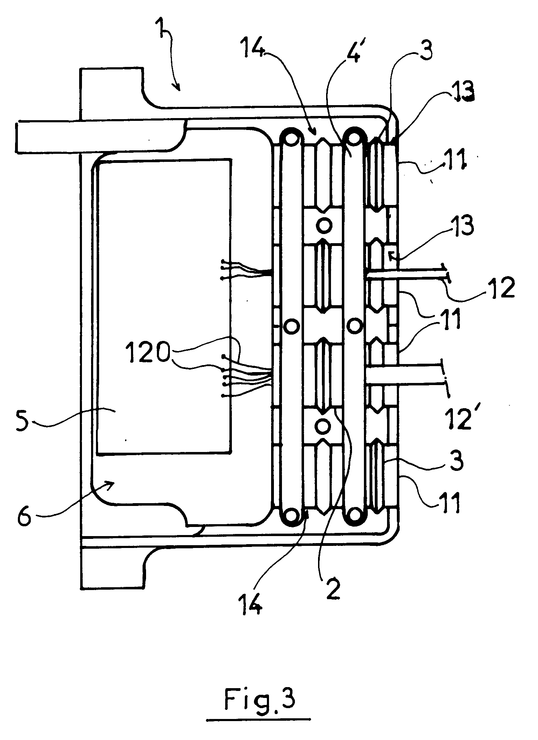

Si on se réfère maintenant à la figure 3 on peut voir deux câbles 12 et 12' qui passent par les deux orifices centraux 11 de l'une des demi-coques 1 du coffret et qui traversent chacun un élément de réduction 2 disposé dans le logement 14 le plus éloigné de l'orifice d'entrée correspondant, les diamètres de ces câbles 12, 12', différents l'un de l'autre, étant inférieurs à celui des orifices d'entrée 11. On peut voir également que les extrémités des fils 120 des câbles 12,12' sont connectées électriquement à une carte électronique 5 disposée dans un logement 6 pratiqué dans la demi-coque 1 du coffret 1.

Les deux orifices d'extrémité 11 du coffret sont obturés chacun par un élément d'obturation 3 inséré dans la gorge 15 du logement 13 situé immédiatement à l'arrière de l'orifice 11 correspondant.

Ainsi les orifices d'entrée 11 qui ne sont pas occupés par des câbles peuvent être facilement obturés et les câbles 12 de diamètre inférieur peuvent être maintenus dans le coffret sans que l'isolation de ce dernier en soit affectée.

Le coffret selon l'invention est donc adapté à recevoir des extrémités de câbles de différents diamètres tout en répondant aux exigences d'isolation électromagnétique et en assurant la protection d'une carte électronique qu'il peut renfermer.

Le coffret selon l'invention pourra être livré à la commercialisation accompagné d'un certain nombre d'obturateurs ainsi que d'un jeu d'éléments de réduction correspondant à des diamètres de câbles parmi les plus courants, et d'un jeu de brides permettant de varier le nombre et le diamètre des câbles dont il pourra abriter les extrémités.

## Revendications

1. Coffret de protection pour extrémités de câbles électriques dont les fils sont destinés notamment à être connectés à une borne de connexion et/ou à une carte électronique (5) disposée dans ledit coffret, du type comprenant deux demi-coques (1) solidarisables l'une à l'autre et comportant chacune des découpes semi-cylindriques (11) destinées à constituer les orifices d'entrée pour câbles (12), prolongées chacune par au moins un logement hémicylindrique (13,14) pour le maintien desdits câbles (12), caractérisé en ce que chaque logement hémicylindrique (13,14) est pourvu d'une gorge (15) pour le maintien soit d'un élément de réduction (2) délimitant un nouvel orifice (21) de diamètre inférieur, soit d'un élément d'obturation (3) de l'orifice d'entrée de câble correspondant.

2. Coffret selon la revendication 1 caractérisé en ce que chaque orifice (11) d'entrée des câbles (12) se prolonge par deux logements (13,14), le logement (14) le plus éloigné de l'orifice (11) correspondant étant destiné à recevoir un élément de réduction (2) et le logement (13) situé immédiatement en arrière de l'orifice d'entrée (11) étant destiné à recevoir un élément d'obturation (3) dudit orifice (11).

3. Coffret selon la revendication 1 ou 2 caractérisé en ce que chaque élément de réduction (2) et chaque élément d'obturation (3) comporte sur sa surface externe une nervure périhérique (20) destinée à venir s'insérer dans la gorge (15) pratiquée dans ledit logement (13, 14).

4. Coffret selon l'une quelconque des revendications précédentes caractérisé en ce que les éléments de réduction (2) sont constitués de deux pièces hémicylindriques identiques (2') dans chacune desquelles est pratiquée centralement et longitudinalement dans sa face plane un orifice hémicylindrique (21) destiné à recevoir un câble (12).

5. Coffret selon l'une quelconque des revendications précédentes, caractérisé en ce qu'au moins une bride de maintien (4, 4') est positionnée dans chaque demicoque, dans l'espace séparant les logements (13) des logements (14), ou en arrière des logements (14) les plus éloignés des orifices d'entrée (11).
